# EUROPÄISCHE PATENTSCHRIFT

(11) **EP 1 162 851 B1**
(45) Veröffentlichungstag und Bekanntmachung des Hinweises auf die Patenterteilung: **10.12.2003**
(21) Anmeldenummer: 01250203.5
(22) Anmeldetag: 06.06.2001
(51) Int. Cl.: H04Q 3/00

(54) **Verfahren zur Kommunikation zwischen Kommunikationsnetzen**
Method for communication between communication networks
Méthode pour la communication entre réseaux de communication

(30) Priorität: 08.06.2000 DE 10028715
(43) Veröffentlichungstag der Anmeldung: 12.12.2001
(73) Patentinhaber: SIEMENS AKTIENGESELLSCHAFT, 80333 München (DE)
(72) Erfinder: Erfurt, Frank, 14532 Kleinmachnow (DE)

(56) Entgegenhaltungen:
- EP-A- 0 666 670
- FR-A- 2 758 925

## Beschreibung

Die Erfindung betrifft ein Verfahren zur Kommunikation zwischen Kommunikationsnetzen, in denen verschiedene Kommunikationsprotokolle anwendbar sind und die über mindestens einen Netzzwischenknoten miteinander verbunden sind. Derartige Kommunikationsverfahren werden insbesondere während der derzeitigen Liberalisierung der Telekommunikationsmärkte angewendet. Es ist hierbei notwendig, dass Netzbetreiber ihre Netze für andere Netzbetreiber öffnen. Die Netze der verschiedenen Netzbetreiber werden dann über gemeinsame Netzknoten, die im Folgenden als Netzzwischenknoten bezeichnet werden, miteinander verbunden.

Um eine Kommunikation zwischen diesen Netzen zu ermöglichen, ist es denkbar, dass der Netzzwischenknoten alle ihn erreichenden Nachrichten in das jeweils angewandte Kommunikationsprotokoll des als Kommunikationsziel dienenden Kommunikationsnetzes übersetzt. Diese Lösung verursacht jedoch in dem Netzzwischenknoten einen erheblichen Aufwand und erfordert eine hohe Rechenleistung, da alle Nachrichten komplett dekodiert und wieder in dem neuen Kommunikationsprotokoll kodiert werden müssen.

Der Erfindung liegt die Aufgabe zugrunde, ein Verfahren anzugeben, mit dem auf einfache Art und Weise zwischen Kommunikationsnetzen, in denen verschiedene Kommunikationsprotokolle anwendbar sind, ohne unerwünschte Beeinflussung der Netze untereinander kommuniziert werden kann.

Diese Aufgabe wird erfindungsgemäß dadurch gelöst, dass bei einem Verfahren der eingangs angegebenen Art
- von einem Startknoten eines ersten Kommunikationsnetzes zum Start einer Kommunikation mit einem Zielknoten eines zweiten Kommunikationsnetzes eine nach einem in dem ersten Kommunikationsnetz anwendbaren ersten Kommunikationsprotokoll aufgebaute Startnachricht an den Netzzwischenknoten gesendet wird,
- daraufhin von dem Netzzwischenknoten unter Nutzung von aus einer Datensammlung ausgelesenen Zielknoten-Informationen mittels Nachrichtensendungen zu dem Zielknoten und dem Startknoten sowohl der Zielknoten als auch der Startknoten zur Verwendung eines gemeinsamen Kommunikationsprotokolls angeregt werden, das sowohl im ersten als auch im zweiten Kommunikationsnetz zur Kommunikation zwischen dem Startknoten und dem Zielknoten anwendbar ist und das gegenüber dem ersten Kommunikationsprotokoll einen eingeschränkten Funktionsumfang aufweist, und
- nachfolgende, nach dem gemeinsamen Kommunikationsprotokoll aufgebaute Nachrichten zwischen dem Startknoten und dem Zielknoten von dem Netzzwischenknoten unverändert weitergeleitet werden.

Es ist zwar aus der WO00/22789 ein Verfahren bekannt, bei dem zwischen inkompatiblen Netzen mittels eines Controller-Knotens Kommunikationsverbindungen hergestellt werden, indem der Controller-Knoten den inkompatiblen Netzen zugeordnete Adapter über die Verwendung eines vorbestimmten Kommunikationsprotokolls informiert oder selbst eine Übersetzung der verschiedenen Kommunikationsprotokolle vornimmt. Dieses Verfahren dient jedoch lediglich dazu, überhaupt eine Kommunikation zwischen den Netzen zu ermöglichen.

Bei dem erfindungsgemäßen Verfahren ist insbesondere vorteilhaft, dass nur zu Beginn der Kommunikation Aktionen des Netzzwischenknotens erforderlich sind, um den Zielknoten und den Startknoten zur Verwendung eines gemeinsamen Kommunikationsprotokolls anzuregen. Nachfolgende Nachrichten zwischen dem Startknoten und dem Zielknoten werden dann nicht mehr von dem Netzzwischenknoten verändert, sondern lediglich unverändert weitergeleitet ("transparente Weiterleitung"). Vorteilhafterweise kann bei einer entsprechenden Wahl der Einschränkung des Funktionsumfangs des gemeinsamen Kommunikationsprotokolls erreicht werden, dass eine unerwünschte Beeinflussung der Netze untereinander ausgeschlossen ist, da das gemeinsame Kommunikationsprotokoll die zu einer derartigen Beeinflussung notwendigen Funktionen nicht aufweist.

Eine besondere Ausführungsform des erfindungsgemäßen Verfahrens sieht vor, dass bei der Anregung von dem Zielknoten zu dem Startknoten gesendete Nachrichten von dem Netzzwischenknoten einmal auf das Vorliegen des gemeinsamen Kommunikationsprotokolls hin überprüft werden, und nachfolgende, nach dem gemeinsamen Kommunikationsprotokoll aufgebaute Nachrichten zwischen dem Startknoten und dem Zielknoten von dem Netzzwischenknoten ungeprüft weitergeleitet werden, wenn die Überprüfung ein Vorliegen des gemeinsamen Kommunikationsprotokolls ergeben hat. Dabei ist insbesondere vorteilhaft, dass nur eine einzige Überprüfung der Nachrichten vorgenommen werden braucht.

Eine besondere Ausführungsform des erfindungsgemäßen Verfahrens sieht vor, dass der Startknoten und der Zielknoten zur Verwendung des gemeinsamen Kommunikationsprotokolls angeregt werden, indem von dem Netzzwischenknoten als Zielknoten-Informationen eine Kennung des gemeinsamen Kommunikationsprotokolls ausgelesen wird, von dem Netzzwischenknoten die Startnachricht verändert wird durch Ersetzen einer in ihr enthaltenen Protokoll-Kennung des ersten Kommunikationsprotokolls durch die ausgelesene Kennung, von dem Netzzwischenknoten die veränderte Startnachricht an den Zielknoten gesendet wird, von dem Zielknoten eine nach dem gemeinsamen Kommunikationsprotokoll aufgebaute Startantwortnachricht an den Netzzwischenknoten gesendet wird und von dem Netzzwischenknoten die Startantwortnachricht an den Startknoten gesendet wird. Dieses Verfahren erfordert einen sehr geringen Aufwand von dem Netzzwischenknoten, da der Netzzwischenknoten in der Startnachricht lediglich die Protokoll-Kennung verändert. Das Verfahren setzt voraus, dass der Zielknoten die nach dem ersten Kommunikationsprotokoll aufgebaute Startnachricht "verstehen" (d.h. dekodieren) und daraufhin eine Startantwortnachricht erzeugen kann.

Eine weitere spezielle Form des erfindungsgemäßen Verfahrens sieht vor, dass der Startknoten und der Zielknoten zur Verwendung des gemeinsamen Kommunikationsprotokolls angeregt werden, indem von dem Netzzwischenknoten als Zielknoten-Informationen mindestens eine Kennung mindestens eines als gemeinsames Kommunikationsprotokoll geeigneten Kommunikationsprotokolls ausgelesen wird, von dem Netzzwischenknoten anhand der Zielknoten-Informationen überprüft wird, ob das erste Kommunikationsprotokoll ein solches geeignetes gemeinsames Kommunikationsprotokoll ist, bei nicht geeignetem ersten Kommunikationsprotokoll eine Mitteilungsnachricht an den Startknoten gesendet wird und von diesem daraufhin eine weitere, nach einem zweiten Kommunikationsprotokoll aufgebaute Startnachricht an den Netzzwischenknoten gesendet wird, der Vorgang des Prüfens, Sendens der Mitteilungsnachricht und Sendens einer weiteren Startnachricht gegebenenfalls solange wiederholt wird, bis vom Startknoten eine Startnachricht gesendet wird, die nach einem geeigneten gemeinsamen Kommunikationsprotokoll aufgebaut ist, daraufhin diese Startnachricht vom Netzzwischenknoten an den Zielknoten gesendet wird, von dem Zielknoten eine nach dem geeigneten gemeinsamen Kommunikationsprotokoll aufgebaute Startantwortnachricht an den Netzzwischenknoten gesendet wird und von dem Netzzwischenknoten die Startantwortnachricht an den Startknoten gesendet wird. Hierbei ist insbesondere von Vorteil, dass der Zielknoten immer die Startnachricht "versteht", da die gesamte Startnachricht nach dem gemeinsamen Kommunikationsprotokoll aufgebaut ist.

Eine weitere vorteilhafte Ausgestaltungsform des erfindungsgemäßen Verfahrens sieht vor, dass der Startknoten und der Zielknoten zur Verwendung des gemeinsamen Kommunikationsprotokolls angeregt werden, indem von dem Netzzwischenknoten als Zielknoten-Informationen mindestens eine Kennung mindestens eines als gemeinsames Kommunikationsprotokoll geeigneten Kommunikationsprotokolls ausgelesen wird, von dem Netzzwischenknoten anhand der Zielknoten-Informationen überprüft wird, ob das erste Kommunikationsprotokoll ein solches geeignetes gemeinsames Kommunikationsprotokoll ist, bei nicht geeignetem ersten Kommunikationsprotokoll eine Mitteilungsnachricht an den Startknoten gesendet wird, die eine Kennung eines geeigneten gemeinsamen Kommunikationsprotokolls enthält, von dem Startknoten daraufhin eine weitere, nach diesem gemeinsamen Kommunikationsprotokoll aufgebaute Startnachricht an den Netzzwischenknoten gesendet wird, daraufhin diese Startnachricht vom Netzzwischenknoten an den Zielknoten gesendet wird, von dem Zielknoten eine nach diesem gemeinsamen Kommunikationsprotokoll aufgebaute Startantwortnachricht an den Netzzwischenknoten gesendet wird und von dem Netzzwischenknoten die Startantwortnachricht an den Startknoten gesendet wird. Diese Ausführungsform ist insbesondere deshalb vorteilhaft, weil dem Startknoten mit der Mitteilungsnachricht sofort eine Kennung eines geeigneten gemeinsamen Kommunikationsprotokolls mitgeteilt wird; daher ist das Verfahren nach dieser Ausführungsform besonders schnell.

Vorteilhafterweise kann das erfindungsgemäße Verfahren so aufgebaut sein, dass die Startantwortnachricht nur dann von dem Netzzwischenknoten an den Startknoten gesendet wird, wenn eine Prüfung der Startantwortnachricht durch den Netzzwischenknoten ergibt, dass diese nach dem gemeinsamen Kommunikationsprotokoll aufgebaut ist. Dadurch ist sichergestellt, dass die Startantwortnachricht nur dann an den Startknoten gesendet wird, wenn sie vom Zielknoten tatsächlich nach dem gemeinsamen Kommunikationsprotokoll aufgebaut wurde. Daher bietet dieses Verfahren eine besonders große Sicherheit gegenüber der Verwendung eines nicht geeigneten, also nicht gemeinsam nutzbaren Kommunikationsprotokolls.

Eine weitere spezielle Ausführungsform des erfindungsgemäßen Verfahrens sieht vor, dass der Startknoten und der Zielknoten zur Verwendung des gemeinsamen Kommunikationsprotokolls angeregt werden, indem von dem Netzzwischenknoten die Startnachricht unverändert an den Zielknoten weitergesendet wird, von dem Zielknoten mit Hilfe von aus einem ihm zugänglichen Datenspeicher ausgelesenen Informationen überprüft wird, ob das erste Kommunikationsprotokoll ein gemeinsames Kommunikationsprotokoll ist, bei positivem Prüfungsergebnis eine nach dem ersten Kommunikationsprotokoll aufgebaute Startantwortnachricht an den Netzzwischenknoten gesendet wird, bei negativem Prüfungsergebnis aus dem Datenspeicher eine Kennung eines Kommunikationsprotokolls zur Kommunikation mit dem Startknoten ausgelesen wird und von dem Zielknoten eine nach diesem Kommunikationsprotokoll aufgebaute Startantwortnachricht an den Netzzwischenknoten gesendet wird, von dem Netzzwischenknoten überprüft wird, ob es sich bei dem Kommunikationsprotokoll der Startantwortnachricht um ein gemeinsames Kommunikationsprotokoll handelt und bei einem gemeinsamen Kommunikationsprotokoll von dem Netzzwischenknoten die Startantwortnachricht an den Startknoten gesendet wird. Dieses Verfahren ist aus Sicht des Netzzwischenknotens besonders einfach durchzuführen, da dieser die Startnachricht unverändert an den Zielknoten weiterleitet und lediglich überprüft, ob die daraufhin eintreffende Startantwortnachricht nach einem gemeinsamen Kommunikationsprotokoll aufgebaut ist.

Eine vorteilhafte Ausführungsform des erfindungsgemäßen Verfahrens sieht vor, dass eine Kommunikation zwischen dem Startknoten und dem Zielknoten gestartet wird, welche eine Erbringung von Diensten durch den Zielknoten für einen mit dem Startknoten verbundenen Dienstnutzer ermöglicht. Dadurch können Dienste zwischen Netzknoten (hier durch den Zielknoten für den Startknoten) auch dann erbracht werden, wenn sich diese Knoten in verschiedenen Kommunikationsnetzen befinden, in denen verschiedene Kommunikationsprotokolle anwendbar sind.

Eine weitere Ausgestaltungsform des erfindungsgemäßen Verfahrens ist dadurch gekennzeichnet, dass als Startknoten ein Dienstevermittlungspunkt eines intelligenten Netzes verwendet wird.

In einer speziellen Ausführungsform des Verfahrens ist vorgesehen, dass als Zielknoten ein Dienstesteuerpunkt eines intelligenten Netzes verwendet wird. Dadurch kann das erfindungsgemäße Verfahren in Kommunikationsnetzen eingesetzt werden, die die Struktur eines intelligenten Netzes aufweisen. Dienstevermittlungspunkte SSP (SSP = service switching point) und Dienstesteuerpunkte SCP (SCP = service control point) sind typische Bestandteile solcher intelligenten Netze.

Eine weitere spezielle Ausgestaltungsform des erfindungsgemäßen Verfahrens sieht vor, dass der Startknoten und der Zielknoten zur Verwendung einer INAP-Protokoll-Version als gemeinsames Kommunikationsprotokoll angeregt werden. Das INAP-Protokoll (INAP = Intelligent Network Application Protocol) wird typischerweise in auf dem Signalisierungssystem Nr. 7 (signalling system no. 7) basierenden intelligenten Netzen eingesetzt und ist z.B. in dem Standard ETS 300 374-1 "Intelligent Network (IN); Intelligent Network Capability Set 1 (CS1); Core Intelligent Network Application Protocol (INAP); Part 1: Protocol specification" der Organisation ETSI (European Telecommunications Standards Institute) beschrieben. Das INAP-Protokoll nutzt den TCAP-Standard (TCAP = Transaction Capabilities Application Part). Durch den TCAP-Standard wird insbesondere verhindert, dass Startknoten und Zielknoten, die zur Verwendung eines gemeinsamen Kommunikationsprotokolls angeregt wurden, von diesem gemeinsamen Kommunikationsprotokoll innerhalb der laufenden Kommunikation zu einem anderem Kommunikationsprotokoll wechseln.

Zur weiteren Erläuterung des Verfahrens ist in
Figur 1 eine schematische Darstellung eines Ausführungsbeispiels zweier über einen Netzzwischenknoten verbundener Kommunikationsnetze, in
Figur 2 eine schematische Darstellung des Ablaufs eines Ausführungsbeispiels des erfindungsgemäßen Verfahrens, in
Figur 3 eine weitere schematische Darstellung des Ablaufs eines Ausführungsbeispiels des erfindungsgemäßen Verfahrens, in
Figur 4 eine weitere schematische Darstellung des Ablaufs eines Ausführungsbeispiels des erfindungsgemäßen Verfahrens, in
Figur 5 eine weitere schematische Darstellung des Ablaufs eines Ausführungsbeispiels des erfindungsgemäßen Verfahrens und in
Figur 6 eine schematische Darstellung eines speziellen Ausführungsbeispiels zweier verbundener Kommunikationsnetze gezeigt.

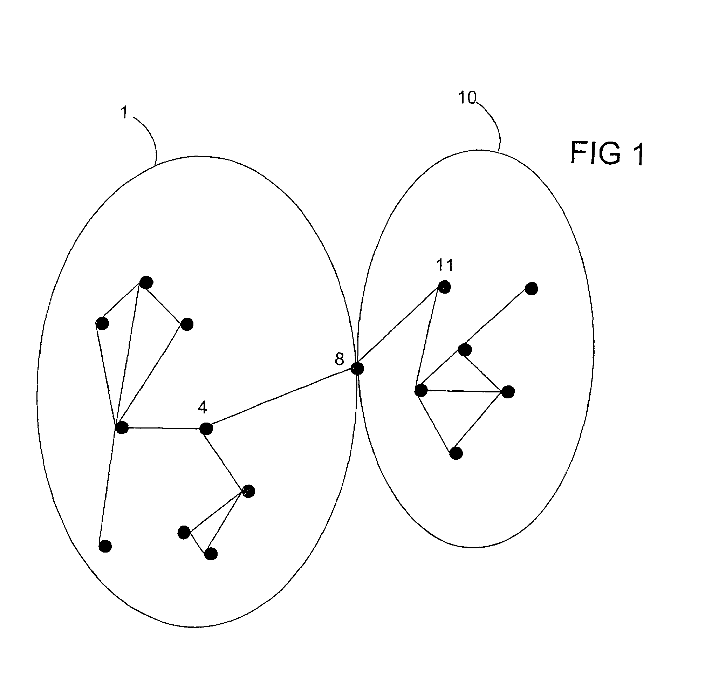

In Figur 1 ist auf der linken Seite ein Kommunikationsnetz 1 dargestellt, welches als Punkte dargestellte Netzknoten und als Geraden dargestellte Verbindungen zwischen diesen Netzknoten enthält. Solche Netzknoten können z.B. Ortsvermittlungsstellen (local exchange), Dienstevermittlungspunkte (service switching point) oder Dienstesteuerpunkte (service control point) sein. Einer dieser Netzknoten ist ein Startknoten 4, unter dem hier ein Knoten verstanden wird, von dem aus eine Kommunikationsverbindung aufgebaut werden soll. Das Kommunikationsnetz 1 ist über einen Netzzwischenknoten 8 mit einem weiteren Kommunikationsnetz 10 verbunden, welches ebenfalls Netzknoten und Verbindungen zwischen den Netzknoten enthält. Ein weiterer Netzknoten dieses weiteren Kommunikationsnetzes ist ein Zielknoten 11, zu dem hin vom Startknoten aus eine Kommunikationsverbindung aufgebaut werden soll. Der Startknoten 4 des Kommunikationsnetzes 1 ist über den Netzzwischenknoten 8 mit dem Zielknoten 11 des weiteren Kommunikationsnetzes 10 verbunden.

Hierbei sei angemerkt, dass es sich bei der Verbindung zwischen dem Startknoten 4 und dem Netzzwischenknoten 8 nicht notwendigerweise um eine direkte Verbindung handeln muss; es können zwischen den Startknoten 4 und dem Netzzwischenknoten 8 auch weitere Netzknoten enthalten sein, welche die Nachrichten zwischen dem Startknoten und dem Netzzwischenknoten 8 bezüglich der für das beschriebene Verfahren relevanten Inhalte unverändert weiterleiten. Entsprechendes trifft auch für die Verbindung zwischen dem Netzzwischenknoten 8 und dem Zielknoten 11 zu.

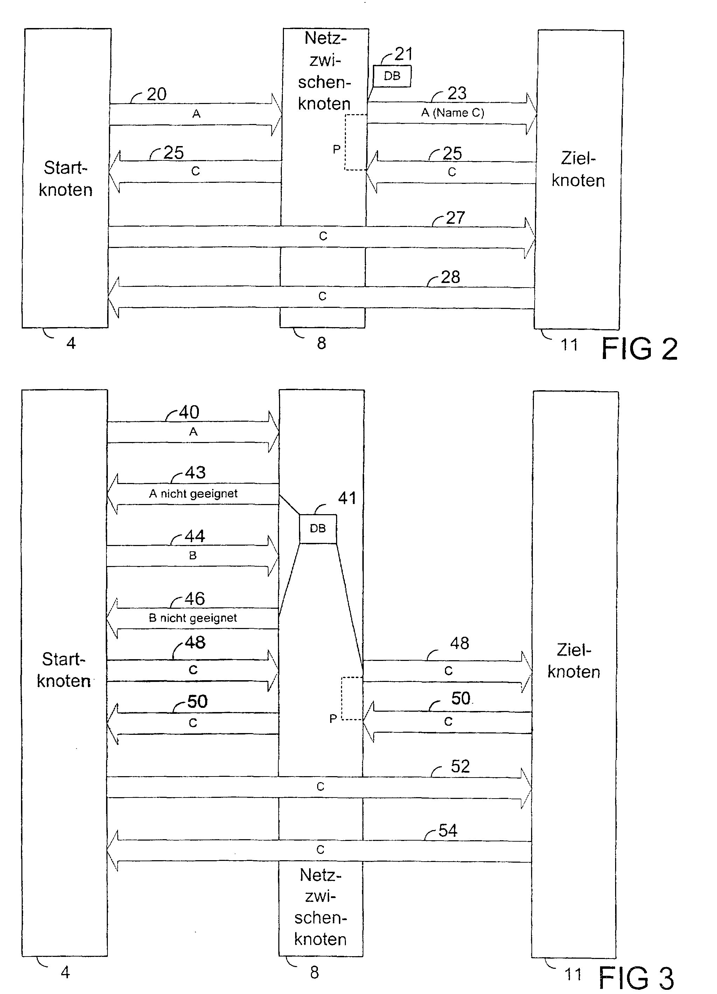

In Figur 2 ist dargestellt, wie zwischen dem Startknoten 4, dem Netzzwischenknoten 8 und dem Zielknoten 11 Nachrichten ausgetauscht werden. Die Nachrichten sind als Pfeile dargestellt. Die in den Pfeilen enthaltenden Großbuchstaben (in diesem Fall A und C) kennzeichnen das Kommunikationsprotokoll, nach dem die entsprechenden Nachrichten aufgebaut sind. Die zeitliche Reihenfolge der Übermittlung der Nachrichten verläuft von oben nach unten. Der Nachrichtenfluss beginnt links oben am Startknoten 4.

Der in dem Kommunikationsnetz 1 enthaltende Startknoten 4 sendet zuerst eine nach einem in dem ersten Kommunikationsnetz anwendbaren ersten Kommunikationsprotokoll A aufgebaute Startnachricht 20 an den Netzzwischenknoten 8. Der Zwischenknoten 8 erkennt anhand des Inhaltes der Nachricht 20, dass diese Nachricht an den Zielknoten 11 des weiteren Kommunikationsnetzes geschickt werden soll. Aus einer im Netzzwischenknoten 8 enthaltenen oder mit ihm verbundenen Datenbank 21 liest der Netzzwischenknoten 8 die Information aus, dass die Kommunikation zwischen dem Startknoten 4 und dem Zielknoten 11 mittels eines Kommunikationsprotokolls C erfolgen soll. Er liest eine Kennung des Kommunikationsprotokolls C, welches als gemeinsames Kommunikationsprotokoll zur Kommunikation zwischen dem Startknoten 4 und dem Zielknoten 11 genutzt werden soll, aus der Datenbank 21 aus.

Der Netzzwischenknoten 8 verändert nun die Startnachricht 20 dahingehend, dass er eine in dieser Startnachricht enthaltene Protokollkennung des Kommunikationsprotokolls A durch die aus der Datenbank 21 ausgelesene Kennung des Kommunikationsprotokolls C ersetzt. Die Startnachricht bleibt aber weiterhin nach dem Kommunikationsprotokoll A aufgebaut. Nun wird die veränderte Startnachricht 23 an den Zielknoten 11 weitergesendet. Der Zielknoten 11 erkennt aufgrund der Kennung C der veränderten Startnachricht 23, dass eine Kommunikation mit nach dem Kommunikationsprotokoll C aufgebauten Nachrichten erwünscht ist, und sendet eine Startantwortnachricht 25, welche nach dem gemeinsamen Kommunikationsprotokoll C aufgebaut ist, an den Netzzwischenknoten zurück. Der Netzzwischenknoten 8 kann nun optional überprüfen, ob die Startantwortnachricht 25 tatsächlich nach dem Kommunikationsprotokoll C aufgebaut ist; diese Prüfung ist in der Figur durch das Zeichen "P" im Netzzwischenknoten 8 symbolisiert. Diese optionale Prüfung erhöht die Sicherheit des Verfahrens insbesondere dann, wenn sichergestellt werden soll, dass der Zielknoten 11 tatsächlich mit einer Startantwortnachricht antwortet, welche nach dem Kommunikationsprotokoll aufgebaut wurde, dessen Kennung mit der veränderten Startnachricht 23 zu den Zielknoten gesendet wurde. Im Falle eines negativen Prüfungsergebnisses wird eine Fehlerbehandlung ausgelöst; beispielsweise kann die Kommunikation abgebrochen werden sowie das aus Sicht des Netzzwischenknotens fehlerhafte Arbeiten des Zielknotens in einem Fehlerprotokoll festgehalten werden.

Bei positivem Prüfungsergebnis wird die Startantwortnachricht 25 unverändert an den Startknoten 4 weitergesendet. Der Startknoten 4 entnimmt nun der nach dem Kommunikationsprotokoll C aufgebauten Startantwortnachricht 25, dass die Kommunikation mit dem Zielknoten 11 mittels nach dem Kommunikationsprotokoll C aufgebauten Nachrichten erfolgt. Zu diesem Zeitpunkt ist also sowohl der Zielknoten 11 als auch der Starknoten 4 vom Netzzwischenknoten 8 dazu angeregt worden, zur Kommunikation das gemeinsame Kommunikationsprotokoll C zu verwenden. Demzufolge wird eine folgende Nachricht 27 vom Startknoten 4 nach dem Kommunikationsprotokoll C aufgebaut und an den Netzzwischenknoten gesendet. Der Netzzwischenknoten 8 sendet diese Nachricht 27 unverändert an den Zielknoten weiter. Auch der Zielknoten 11 baut nun eine nächste an den Startknoten 4 zu sendende Nachricht 28 wiederum nach dem gemeinsamen Kommunikationsprotokoll C auf und sendet diese an den Netzzwischenknoten zurück. Der Netzzwischenknoten leitet die Nachricht 28 unverändert an den Startknoten 4 weiter. Alle folgenden Nachrichtensendungen, die während dieser Kommunikation auftreten, werden nun nach dem gemeinsamen Kommunikationsprotokoll C aufgebaut und vom Netzzwischenknoten 8 unverändert an das jeweilige Ziel weitergeleitet.

In Figur 3 ist wiederum dargestellt, wie von dem Startknoten 4 des ersten Kommunikationsnetzes zum Start einer Kommunikation mit dem Zielknoten 11 des zweiten Kommunikationsnetzes eine nach dem in dem ersten Kommunikationsnetz anwendbaren ersten Kommunikationsprotokoll A aufgebaute Startnachricht 40 an den Netzzwischenknoten 8 gesendet wird. Daraufhin liest der Netzzwischenknoten 8 aus einer Datenbank 41 als Zielknoteninformationen über den Zielknoten 11 insbesondere aus, welche Kommunikationsprotokolle als gemeinsames Kommunikationsprotokoll zur Kommunikation zwischen dem Startknoten 4 und dem Zielknoten 11 verwendet werden können. Aufgrund dieser Zielknoteninformationen stellt der Netzzwischenknoten 8 fest, dass das erste Kommunikationsprotokoll A nicht als gemeinsames Kommunikationsprotokoll geeignet ist. Er sendet daraufhin eine Mitteilungsnachricht 43 an den Startknoten 4, mit der er dem Startknoten 4 mitteilt, dass das Kommunikationsprotokoll A kein gemeinsames Kommunikationsprotokoll für Startknoten und Zielknoten ist. Der Startknoten 4 besitzt seinerseits eine Aufstellung über mögliche Kommunikationsprotokolle. Er entnimmt dieser Aufstellung ein zweites Kommunikationsprotokoll B, baut nach diesem zweiten Kommunikationsprotokoll B eine weitere Startnachricht 44 auf, und sendet diese an den Netzzwischenknoten 8. Wiederum stellt der Netzzwischenknoten 8 fest, dass auch das zweite Kommunikationsprotokoll B nicht als gemeinsames Kommunikationsprotokoll geeignet ist und sendet daraufhin eine weitere Mitteilungsnachricht 46 an den Startknoten 4 zurück. Mit dieser weiteren Mitteilungsnachricht 46 wird dem Startknoten mitgeteilt, dass das Kommunikationsprotokoll B kein gemeinsames Kommunikationsprotokoll ist. Daraufhin entnimmt der Startknoten 4 seiner Aufstellung ein weiteres Kommunikationsprotokoll C und baut nach diesem eine weitere Startnachricht 48 auf und sendet diese an den Netzzwischenknoten 8. Nun stellt der Netzzwischenknoten 8 fest, dass das dritte Kommunikationsprotokoll C als gemeinsames Kommunikationsprotokoll geeignet ist; daraufhin sendet er die Startnachricht 48 an den Zielknoten 11 weiter. Der Zielknoten erkennt aus der Startnachricht 48, dass die weiteren Kommunikationsschritte nach dem gemeinsamen Kommunikationsprotokoll C abgewickelt werden sollen und baut nach diesem Kommunikationsprotokoll C eine Startantwortnachricht 50 auf, die er an den Netzzwischenknoten 8 zurücksendet. Der Netzzwischenknoten kann nun wiederum optional überprüfen, ob die Startantwortnachricht 50 nach demselben Kommunikationsprotokoll aufgebaut ist, nach der auch die Startnachricht 48 aufgebaut war (in diesem Fall nach dem Kommunikationsprotokoll C). Ist dies nicht der Fall, kann wieder, wie im Zusammenhang mit Figur 2 beschrieben, eine Ausnahmebehandlung einsetzen. Fällt die Prüfung positiv aus, so wird die Startantwortnachricht 50 an den Startknoten weitergeleitet. Der Startknoten 4 erkennt nun aus der Startantwortnachricht 50, dass die weitere Kommunikation unter Anwendung des Kommunikationsprotokolls C abgewickelt werden soll, demzufolge werden nun folgende Nachrichten 52 und 54 nach dem Kommunikationsprotokoll C aufgebaut und vom Netzzwischenknoten unverändert zu ihrem jeweiligen Ziel weitergeleitet.

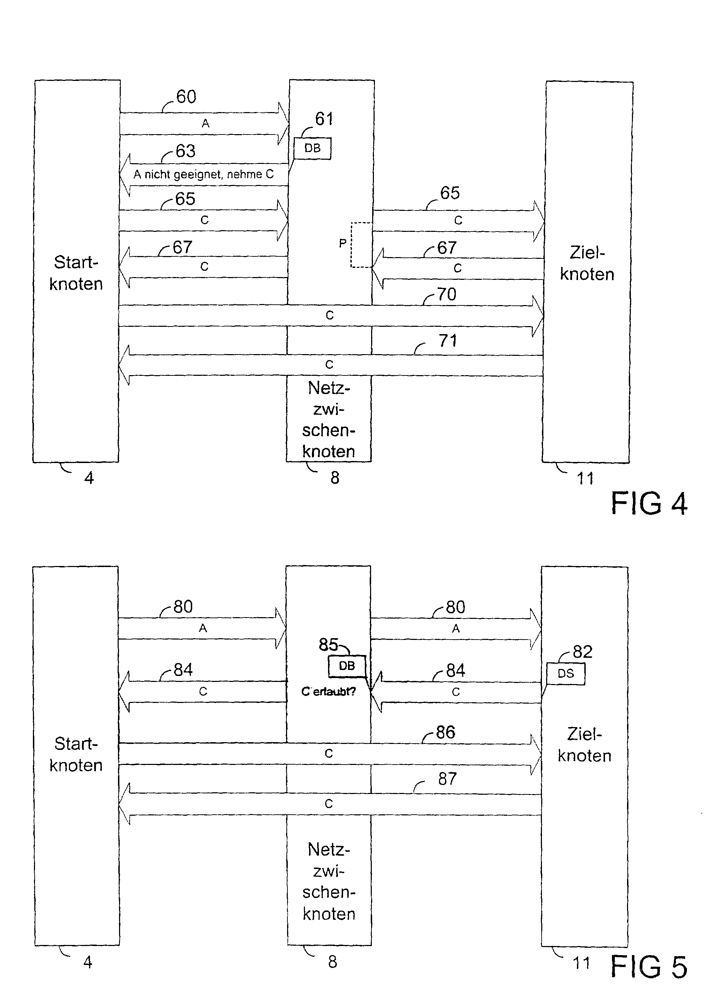

Das in Figur 4 näher beschriebene Verfahren verläuft anfänglich identisch mit dem in Figur 3 beschriebenen Verfahren ab. Wie bei Figur 3 beschrieben, wird. eine nach einem ersten Kommunikationsprotokoll A aufgebaute Startnachricht 60 an den Netzzwischenknoten 8 gesendet. Der Netzzwischenknoten 8 stellt aufgrund von aus einer Datenbank 61 ausgelesenen Zielknoteninformation fest, dass das erste Kommunikationsprotokoll A nicht als gemeinsames Kommunikationsprotokoll geeignet ist und dass als gemeinsames Kommunikationsprotokoll ein Kommunikationsprotokoll C anwendbar ist. Daraufhin sendet der Netzzwischenknoten eine Mitteilungsnachricht 63 an den Startknoten 4 zurück. Diese Mitteilungsnachricht 63 enthält die Information, dass das Kommunikationsprotokoll A nicht als gemeinsames Kommunikationsprotokoll geeignet ist und dass statt dessen das Kommunikationsprotokoll C als gemeinsames Kommunikationsprotokoll zu verwenden ist. Daraufhin baut nun der Startknoten 4 eine zweite Startnachricht 65 nach dem gemeinsamen Kommunikationsprotokoll C auf und sendet diese an den Netzzwischenknoten 8, der daraufhin diese Startnachricht 65 an den Zielknoten 11 weitersendet. Der Zielknoten 11 erkennt aus der Startnachricht 65, dass die Kommunikation mit nach dem gemeinsamen Kommunikationsprotokoll C aufgebauten Nachrichten fortgesetzt werden soll und schickt eine nach diesem Kommunikationsprotokoll C aufgebaute Startantwortnachricht 67 an den Netzzwischenknoten zurück. Der weitere Ablauf mit der optionalen Prüfung der Startantwortnachricht 67 im Netzzwischenknoten, der Weiterleitung dieser Nachricht an den Startknoten 4 und dem Senden von nachfolgenden, nach dem gemeinsamen Kommunikationsprotokoll C aufgebauten Nachrichten 70 und 71 zum Startknoten bzw. Zielknoten entspricht dem im Zusammenhang mit Figur 3 erläuterten Verfahren.

In Figur 5 ist eine weitere Ausführungsform des Verfahrens dargestellt. Wiederum wird zu Beginn des Verfahrens vom Startknoten 4 eine nach einem ersten Kommunikationsprotokoll A aufgebaute Startnachricht 80 an den Netzzwischenknoten 8 gesendet. Im Gegensatz zu den bisher beschriebenen Verfahren leitet der Netzzwischenknoten diese Startnachricht 80 unverändert an den Zielknoten 11 weiter. Der Zielknoten 11 überprüft nun anhand von in einen ihm zugänglichen Datenspeicher 82 gespeicherten Informationen, ob das erste Kommunikationsprotokoll A als gemeinsames Kommunikationsprotokoll für die Kommunikation mit dem Startknoten 4 geeignet ist. Ist dies nicht der Fall, so liest der Zielknoten aus dem Datenspeicher 82 eine Kennung eines als gemeinsames Kommunikationsprotokoll geeigneten Kommunikationsprotokolls C aus und baut nach diesem Kommunikationsprotokoll C eine Startantwortnachricht 84 auf. Diese Startantwortnachricht 84 sendet er daraufhin an den Netzzwischenknoten 8. Der Netzzwischenknoten 8 liest nun als Zielknoteninformationen aus einer ihm zugänglichen Datenbank 85 aus, ob das Kommunikationsprotokoll C als gemeinsames Kommunikationsprotokoll geeignet ist. Ist dies nicht der Fall, so wird die Kommunikation mit einer Fehlerbehandlung fortgesetzt, wie sie beispielsweise im Zusammenhang mit Figur 2 beschrieben war. Zeigt die Prüfung ein positives Ergebnis, so sendet der Netzzwischenknoten 8 die Startantwortnachricht 84 unverändert an den Startknoten 4 weiter. Der Startknoten 4 erkennt aus der Startantwortnachricht 84, dass die weitere Kommunikation nach dem gemeinsamen Kommunikationsprotokoll C folgen soll, und baut eine weitere Nachricht 86 nach diesem Kommunikationsprotokoll C auf. Diese weitere Nachricht 86 sowie alle folgenden weiteren Nachrichten (z. B. die Nachricht 87) dieser Kommunikation werden nun in bekannter Weise vom Netzzwischenknoten unverändert zum Zielknoten bzw. zum Startknoten weitergeleitet, ohne dass der Netzzwischenknoten nochmals in die Kommunikation zwischen Startknoten und Zielknoten eingreift.

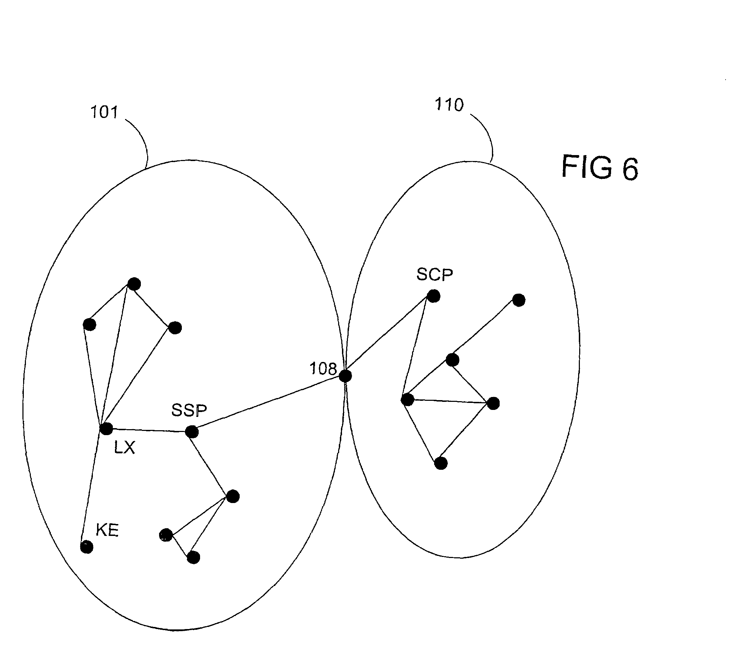

In Figur 6 ist beispielhaft eine mögliche Situation dargestellt, in der das erfindungsgemäße Verfahren ablaufen kann. Ein Netzknoten eines Kommunikationsnetzes 101 wird durch ein Kommunikationsendgerät KE (z.B. ein Telefon), ein weiterer Netzknoten durch eine Ortsvermittlungsstelle LX (local exchange) und der in Figur 1 Startknoten genannte Knoten durch einen Dienstevermittlungspunkt SSP (service switching point) gebildet. Der in Figur 1 Zielknoten genannte Knoten eines weiteren Kommunikationsnetzes 110 wird durch einen Dienstesteuerpunkt SCP (service control point) gebildet. Das Kommunikationsnetz 101 ist mit dem weiteren Kommunikationsnetz 110 durch einen Netzzwischenknoten 108 verbunden.

Von dem Kommunikationsendgerät KE wird ein im Telekommunikationsnetz 101 aufrufbarer Dienst (z. B. die Abfrage einer Auskunft) aufgerufen; das Kommunikationsendgerät KE stellt einen Dienstnutzer dar. Dazu wird durch das Kommunikationsendgerät KE eine sog. Service-Nummer des Dienstes angewählt und daraufhin eine Verbindung über die Ortsvermittlungsstelle LX zu dem Dienstevermittlungspunkt SSP aufgebaut. Anhand der Service-Nummer erkennt der Dienstevermittlungspunkt SSP, dass der Dienst von dem Dienstesteuerpunkt SCP erbracht wird. Der Dienstesteuerpunkt SCP befindet sich in dem weiteren Kommunikationsnetz 110.

Der Dienstevermittlungspunkt SSP ist Teil einer Struktur eines intelligenten Netzes; sowohl das Kommunikationsnetz 101 als auch das weitere Kommunikationsnetz 110 ist als intelligentes Netz strukturiert. Innerhalb des Kommunikationsnetzes 101 wird zur Kommunikation beispielsweise eine INAP1 genannte erste Version des o.g. Kommunikationsprotokolls INAP benutzt. Dieses Protokoll INAP1 hat beispielsweise einen sehr großen Funktionsumfang und erlaubt vielfältige gegenseitige Beeinflussungen der Elemente der Struktur des intelligenten Netzes im Kommunikationsnetz 101. Wenn diese Elemente jedoch mit Elementen der intelligenten Netz-Struktur des weiteren Kommunikationsnetzes 110 kommunizieren, so kann es aus Sicherheitsgründen nicht erwünscht sein, diese Kommunikation über das Protokoll INAP1 zu führen, da dann auch den Elementen des weiteren Kommunikationsnetzes 110 die vielfältigen Beeinflussungsmöglichkeiten bezüglich des Kommunikationsnetzes 101 möglich wären. Daher soll beispielsweise diese Kommunikation über eine gegenüber der ersten Protokollversion INAP1 eingeschränkte weitere Protokollversion INAP2 geführt werden.

Mit anderen Worten: Eine Kommunikation zwischen dem Dienstevermittlungspunkt SSP und einem in der Figur 101 nicht dargestellten Dienstesteuerpunkt, welcher sich ebenfalls in dem Kommunikationsnetz 101 befinden würde, liefe über das Protokoll INAP1 ab. Eine Kommunikation jedoch zwischen dem Dienstevermittlungspunkt SSP und dem Dienstesteuerpunkt SCP, der sich in dem weiteren Kommunikationsnetz 110 befindet, soll über das Protokoll INAP2 abgewickelt werden. Die Unterscheidung zwischen den Protokollen INAP1 und INAP2 wird auch als Unterscheidung zwischen sog. Applikationskontexten (application context, AC) bezeichnet. Zur Kommunikation zwischen dem Dienstevermittlungspunkt SSP und dem Dienstesteuerpunkt SCP werden die im Zusammenhang mit den Figuren 2 bis 5 detailliert erläuterten Verfahren eingesetzt.

## Patentansprüche

1. Verfahren zur Kommunikation zwischen Kommunikationsnetzen (1,10,101,110), in denen verschiedene Kommunikationsprotokolle anwendbar sind und die über mindestens einen Netzzwischenknoten (8,108) miteinander verbunden sind, bei dem
- von einem Startknoten (4,SSP) eines ersten Kommunikationsnetzes (1,101) zum Start einer Kommunikation mit einem Zielknoten (11,SCP) eines zweiten Kommunikationsnetzes (10,110) eine nach einem in dem ersten Kommunikationsnetz (1,101) anwendbaren ersten Kommunikationsprotokoll aufgebaute Startnachricht (20,40,60,80) an den Netzzwischenknoten (8,108) gesendet wird,
- daraufhin von dem Netzzwischenknoten (8,108) unter Nutzung von aus einer Datensammlung (21,41,61,85) ausgelesenen Zielknoten-Informationen mittels Nachrichtensendungen zu dem Zielknoten (11,SCP) und dem Startknoten (4,SSP) sowohl der Zielknoten (11,SCP) als auch der Startknoten(4,SSP) zur Verwendung eines gemeinsamen Kommunikationsprotokolls angeregt werden, das sowohl im ersten als auch im zweiten Kommunikationsnetz zur Kommunikation zwischen dem Startknoten(4,SSP) und dem Zielknoten (11,SCP) anwendbar ist und das gegenüber dem ersten Kommunikationsprotokoll einen eingeschränkten Funktionsumfang aufweist, und
- nachfolgende, nach dem gemeinsamen Kommunikationsprotokoll aufgebaute Nachrichten (27,28,52,54,70,71,86,87) zwischen dem Startknoten (4,SSP) und dem Zielknoten (11,SCP) von dem Netzzwischenknoten (8,108) unverändert weitergeleitet werden.

2. Verfahren nach Anspruch 1,
**dadurch gekennzeichnet, dass**
- bei der Anregung von dem Zielknoten (11,SCP) zu dem Startknoten (4,SSP) gesendete Nachrichten (25,50,67,84) von dem Netzzwischenknoten (8,108) einmal auf das Vorliegen des gemeinsamen Kommunikationsprotokolls hin überprüft werden, und
- nachfolgende, nach dem gemeinsamen Kommunikationsprotokoll aufgebaute Nachrichten (27,28,52,54,70,71,86,87) zwischen dem Startknoten (4,SSP) und dem Zielknoten (11,SCP) von dem Netzzwischenknoten (8,108) ungeprüft weitergeleitet werden, wenn die Überprüfung ein Vorliegen des gemeinsamen Kommunikationsprotokolls ergeben hat.

3. Verfahren nach Anspruch 1 oder 2,
**dadurch gekennzeichnet, dass** der Startknoten (4) und der Zielknoten (11) zur Verwendung des gemeinsamen Kommunikationsprotokolls angeregt werden, indem
- von dem Netzzwischenknoten (8) als Zielknoten-Informationen eine Kennung des gemeinsamen Kommunikationsprotokolls ausgelesen wird,
- von dem Netzzwischenknoten (8) die Startnachricht (20) verändert wird durch Ersetzen einer in ihr enthaltenen Protokoll-Kennung des ersten Kommunikationsprotokolls durch die ausgelesene Kennung,
- von dem Netzzwischenknoten (8) die veränderte Startnachricht (23) an den Zielknoten gesendet wird,
- von dem Zielknoten (11) eine nach dem gemeinsamen Kommunikationsprotokoll aufgebaute Startantwortnachricht (25) an, den Netzzwischenknoten (8) gesendet wird und
- von dem Netzzwischenknoten (8) die Startantwortnachricht (25) an den Startknoten (4) gesendet wird.

4. Verfahren nach Anspruch 1 oder 2,
**dadurch gekennzeichnet, dass** der Startknoten (4) und der Zielknoten (11) zur Verwendung des gemeinsamen Kommunikationsprotokolls angeregt werden, indem
- von dem Netzzwischenknoten (8) als Zielknoten-Informationen mindestens eine Kennung mindestens eines als gemeinsames Kommunikationsprotokoll geeigneten Kommunikationsprotokolls ausgelesen wird,
- von dem Netzzwischenknoten (8) anhand der Zielknoten-Informationen überprüft wird, ob das erste Kommunikationsprotokoll ein solches geeignetes gemeinsames Kommunikationsprotokoll ist,
- bei nicht geeignetem ersten Kommunikationsprotokoll eine Mitteilungsnachricht (43) an den Startknoten (4) gesendet wird und von diesem daraufhin eine weitere, nach einem zweiten Kommunikationsprotokoll aufgebaute Startnachricht (44) an den Netzzwischenknoten (8) gesendet wird,
- der Vorgang des Prüfens, Sendens der Mitteilungsnachricht und Sendens einer weiteren Startnachricht gegebenenfalls solange wiederholt wird, bis vom Startknoten (4) eine Startnachricht (48) gesendet wird, die nach einem geeigneten gemeinsamen Kommunikationsprotokoll aufgebaut ist,
- daraufhin diese Startnachricht (48) vom Netzzwischenknoten (8) an den Zielknoten (11) gesendet wird,
- von dem Zielknoten (11) eine nach dem geeigneten gemeinsamen Kommunikationsprotokoll aufgebaute Startantwortnachricht (50) an den Netzzwischenknoten (8) gesendet wird und
- von dem Netzzwischenknoten (8) die Startantwortnachricht (50) an den Startknoten (4) gesendet wird.

5. Verfahren nach Anspruch 1 oder 2,
**dadurch gekennzeichnet, dass** der Startknoten (4) und der Zielknoten (11) zur Verwendung des gemeinsamen Kommunikationsprotokolls angeregt werden, indem
- von dem Netzzwischenknoten (8) als Zielknoten-Informationen mindestens eine Kennung mindestens eines als gemeinsames Kommunikationsprotokoll geeigneten Kommunikationsprotokolls ausgelesen wird,
- von dem Netzzwischenknoten (8) anhand der Zielknoten-Informationen überprüft wird, ob das erste Kommunikationsprotokoll ein solches geeignetes gemeinsames Kommunikationsprotokoll ist,
- bei nicht geeignetem ersten Kommunikationsprotokoll eine Mitteilungsnachricht (63) an den Startknoten (4) gesendet wird, die eine Kennung eines geeigneten gemeinsamen Kommunikationsprotokolls enthält,
- von dem Startknoten (4) daraufhin eine weitere, nach diesem gemeinsamen Kommunikationsprotokoll aufgebaute Startnachricht (65) an den Netzzwischenknoten (8) gesendet wird,
- daraufhin diese Startnachricht (65) vom Netzzwischenknoten (8) an den Zielknoten (11) gesendet wird,
- von dem Zielknoten (11) eine nach diesem gemeinsamen Kommunikationsprotokoll aufgebaute Startantwortnachricht (67) an den Netzzwischenknoten (8) gesendet wird und
- von dem Netzzwischenknoten (8) die Startantwortnachricht (67) an den Startknoten (4) gesendet wird.

6. Verfahren nach einem der Ansprüche 3 bis 5,
**dadurch gekennzeichnet, dass**
- die Startantwortnachricht (25,50,67) nur dann von dem Netzzwischenknoten (8) an den Startknoten (4) gesendet wird, wenn eine Prüfung der Startantwortnachricht(25,50,67) durch den Netzzwischenknoten (8) ergibt, dass diese nach dem gemeinsamen Kommunikationsprotokoll aufgebaut ist.

7. Verfahren nach Anspruch 1 oder 2,
**dadurch gekennzeichnet, dass** der Startknoten (4) und der Zielknoten (11) zur Verwendung des gemeinsamen Kommunikationsprotokolls angeregt werden, indem
- von dem Netzzwischenknoten (8) die Startnachricht (80) unverändert an den Zielknoten (11) weitergesendet wird,
- von dem Zielknoten (11) mit Hilfe von aus einem ihm zugänglichen Datenspeicher (82) ausgelesenen Informationen überprüft wird, ob das erste Kommunikationsprotokoll ein gemeinsames Kommunikationsprotokoll ist,
- bei positivem Prüfungsergebnis eine nach dem ersten Kommunikationsprotokoll aufgebaute Startantwortnachricht (84) an den Netzzwischenknoten (8) gesendet wird,
- bei negativem Prüfungsergebnis aus dem Datenspeicher (82) eine Kennung eines Kommunikationsprotokolls zur Kommunikation mit dem Startknoten (4) ausgelesen wird und von dem Zielknoten (11) eine nach diesem Kommunikationsprotokoll aufgebaute Startantwortnachricht (84) an den Netzzwischenknoten (8) gesendet wird,
- von dem Netzzwischenknoten (8) überprüft wird, ob es sich bei dem Kommunikationsprotokoll der Startantwortnachricht (84) um ein gemeinsames Kommunikationsprotokoll handelt und
- bei einem gemeinsamen Kommunikationsprotokoll von dem Netzzwischenknoten (8) die Startantwortnachricht (84) an den Startknoten gesendet wird.

8. Verfahren nach einem der vorhergehenden Ansprüche,
**dadurch gekennzeichnet, dass**
- eine Kommunikation zwischen dem Startknoten (SSP) und dem Zielknoten (SCP) gestartet wird, welche eine Erbringung von Diensten durch den Zielknoten (SCP) für einen mit dem Startknoten (SSP) verbundenen Dienstnutzer (KE) ermöglicht.

9. Verfahren nach einem der vorhergehenden Ansprüche,
**dadurch gekennzeichnet, dass**
- als Startknoten (SSP) ein Dienstevermittlungspunkt eines intelligenten Netzes (IN) verwendet wird.

10. Verfahren nach einem der vorhergehenden Ansprüche,
**dadurch gekennzeichnet, dass**
- als Zielknoten (SCP) ein Dienstesteuerpunkt eines intelligenten Netzes (IN) verwendet wird.

11. Verfahren nach einem der vorhergehenden Ansprüche,
**dadurch gekennzeichnet, dass**
- der Startknoten (SSP) und der Zielknoten (SCP) zur Verwendung einer INAP-Protokoll-Version als gemeinsames Kommunikationsprotokoll angeregt werden.

## Claims

1. Method for communication between communication networks (1, 10, 101, 110) in which various communication protocols can be used and which are connected to one another via at least one internetwork node (8, 108), in which
- a starting node (4, SSP) of a first communication network (1, 101), for starting communication with a destination node (11, SCP) of a second communication network (10, 110), sends a starting message (20, 40, 60, 80), which is constructed in accordance with a first communication protocol which can be used in the first communication network (1, 101), to the internetwork node (8, 108),
- the internetwork node (8, 108), utilizing destination node information read out of a data collection (21, 41, 61, 85), then stimulates both the destination node (11, SCP) and the starting node (4, SSP), by means of message transmissions to the destination node (11, SCP) and the starting node (4, SSP), to use a common communication protocol which can be used for communication between the starting node (4, SSP) and the destination node (11, SCP) both in the first communication network and in the second communication network, and which has a range of functions which is restricted in comparison with the first communication protocol, and
- subsequent messages (27, 28, 52, 54, 70, 71, 86, 87) constructed in accordance with the common communication protocol are forwarded between the starting node (4, SSP) and the destination node (11, SCP) unchanged by the internetwork node (8, 108).

2. Method according to Claim 1, **characterized in that**
- during stimulation messages (25, 50, 67, 84) which are transmitted from the destination node (11, SCP) to the starting node (4, SSP) are checked once for the presence of the common communication protocol by the internetwork node (8, 108), and
- subsequent messages (27, 28, 52, 54, 70, 71, 86, 87) which are constructed in accordance with the common communication protocol are forwarded between the starting node (4, SSP) and the destination node (11, SCP) without being checked by the internetwork node (8, 108) if the checking has revealed the presence of the common communication protocol.

3. Method according to Claim 1 or 2, **characterized in that** the starting node (4) and the destination node (11) are stimulated into using the common communication protocol, **in that**
- the internetwork node (8) reads out an identifier of the common communication protocol as destination node information,
- the internetwork node (8) changes the starting message (20) by replacing a protocol identifier of the first communication protocol, contained in it, with the identifier read out,
- the internetwork node (8) sends the changed starting message (23) to the destination node,
- the destination node (11) sends a start response message (25), constructed in accordance with the common communication protocol, to the internetwork node (8), and
- the internetwork node (8) sends the start response message (25) to the starting node (4).

4. Method according to Claim 1 or 2, **characterized in that** the starting node (4) and the destination node (11) are stimulated into using the common communication protocol, **in that**
- the internetwork node (8) reads out, as destination node information, at least one identifier of at least one communication protocol suitable as common communication protocol,
- the internetwork node (8) checks by means of the destination node information whether the first communication protocol is such a suitable common communication protocol,
- if the first communication protocol is unsuitable, an information message (43) is sent to the starting node (4) and the latter then sends a further starting message (44), constructed in accordance with a second communication protocol, to the internetwork node (8),
- the process of checking, sending the information message and sending a further starting message is repeated, as necessary, until the starting node (4) sends a starting message (48) which is constructed in accordance with a suitable common communication protocol,
- this starting message (48) is then sent to the destination node (11) by the internetwork node (8),
- the destination node (11) sends a start response message (50), constructed in accordance with the suitable common communication protocol, to the internetwork node (8), and
- the internetwork node (8) sends the start response message (50) to the starting node (4).

5. Method according to Claim 1 or 2, **characterized in that** the starting node (4) and the destination node (11) are stimulated into using the common communication protocol, **in that**
- the internetwork node (8) reads out, as destination node information, at least one identifier of at least one communication protocol suitable as common communication protocol,
- the internetwork node (8) checks by means of the destination node information whether the first communication protocol is such a suitable common communication protocol,
- if the first communication protocol is unsuitable, an information message (63), which contains an identifier of a suitable common communication protocol, is sent to the starting node (4),
- the starting node (4) then sends a further starting message (65), constructed in accordance with this common communication protocol, to the internetwork node (8),
- this starting message (65) is then sent to the destination node (11) by the internetwork node (8),
- the destination node (11) sends a start response message (67), constructed in accordance with this common communication protocol, to the internetwork node (8), and
- the internetwork node (8) sends the start response message (67) to the starting node (4).

6. Method according to one of Claims 3 to 5,
**characterized in that**
- the internetwork node (8) only sends the start response message (25, 50, 67) to the starting node (4) if a check of the start response message (25, 50, 67) by the internetwork node (8) shows that it is constructed in accordance with the common communication protocol.

7. Method according to Claim 1 or 2, **characterized in that** the starting node (4) and the destination node (11) are stimulated into using the common communication protocol, **in that**
- the internetwork node (8) forwards the starting message (80) unchanged to the destination node (11),
- the destination node (11) checks, with the aid of information read out of a data memory (82) accessible to it, whether the first communication protocol is a common communication protocol,
- if the result of the check is positive, a start response message (84), constructed in accordance with the first communication protocol, is sent to the internetwork node (8).
- if the result of the check is negative, an identifier of a communication protocol is read out of the data memory (82) for communication with the starting node (4), and the destination node (11) sends a start response message (84) constructed in accordance with this communication protocol to the internetwork node (8),
- the internetwork node (8) checks whether the communication protocol of the start response message (84) is a common communication protocol, and,
- if it is a common communication protocol, the internetwork node (8) sends the start response message (84) to the starting node.

8. Method according to one of the preceding claims,
**characterized in that**
- a communication between the starting node (SSP) and the destination node (SCP) is started which enables services to be provided by the destination node (SCP) for a service user (KE) connected to the starting node (SSP).

9. Method according to one of the preceding claims,
**characterized in that**
- a service switching point of an intelligent network (IN) is used as starting node (SSP).

10. Method according to one of the preceding claims,
**characterized in that**
- a service control point of an intelligent network (IN) is used as destination node (SCP).

11. Method according to one of the preceding claims,
**characterized in that**
- the starting node (SSP) and the destination node (SCP) are stimulated into using an INAP protocol version as the common communication protocol.

## Revendications

1. Procédé de communication entre des réseaux de communication (1, 10, 101, 110) dans lesquels différents protocoles de communication sont applicables et qui sont reliés entre eux par l'intermédiaire d'au moins un noeud interréseau (8, 108), dans lequel
- à partir d'un noeud de départ (4, SSP) d'un premier réseau de communication (1, 101), pour le démarrage d'une communication avec un noeud d'arrivée (11, SCP) d'un deuxième réseau de communication (10, 110), on envoie au noeud interréseau (8, 108) un message initial (20, 40, 60, 80) construit selon un premier protocole de communication applicable dans le premier réseau de communication (1, 101),
- ensuite, à partir du noeud interréseau (8, 108) et en exploitant des informations de noeud d'arrivée lues dans une bibliothèque de données (21, 41, 61, 85), on oblige aussi bien le noeud d'arrivée (11, SCP) que le noeud de départ (4, SSP), au moyen d'envois de messages au noeud d'arrivée (11, SCP) et au noeud de départ (4, SSP), à utiliser un protocole de communication commun qui est applicable aussi bien dans le premier réseau de communication que dans le deuxième pour la communication entre le noeud de départ (4, SSP) et le noeud d'arrivée (11, SCP) et qui a un ensemble limité de fonctions par rapport au premier protocole de communication, et
- on retransmet des messages suivants (27, 28, 52, 54, 70, 71, 86, 87), construits selon le protocole de communication commun, entre le noeud de départ (4, SSP) et le noeud d'arrivée (11, SCP), et ce sans les modifier dans le noeud interréseau (8, 108).

2. Procédé selon la revendication 1,
**caractérisé par le fait que**
- des messages (25, 50, 67, 84) envoyés du noeud d'arrivée (11, SCP) au noeud de départ (4, SSP) sont testés une fois par le noeud interréseau (8, 108) pour vérifier la présence du protocole de communication commun, et
- lorsque le test a montré la présence du protocole de communication commun, des messages suivants (27, 28, 52, 54, 70, 71, 86, 87) construits selon le protocole de communication commun sont retransmis entre le noeud de départ (4, SSP) et le noeud d'arrivée (11, SCP) sans contrôle de la part du noeud interréseau (8, 108).

3. Procédé selon la revendication 1 ou 2,
**caractérisé par le fait qu'**on oblige le noeud de départ (4) et le noeud d'arrivée (11) à utiliser le protocole de communication commun en faisant en sorte
- que le noeud interréseau (8) lise comme informations de noeud d'arrivée un identificateur du protocole de communication commun,
- que le noeud interréseau (8) modifie le message de départ (20) en remplaçant un identificateur de protocole qu'il contient et qui correspond au premier protocole de communication par l'identificateur lu,
- que le noeud interréseau (8) envoie le message initial modifié (23) au noeud d'arrivée,
- que le noeud d'arrivée (11) envoie au noeud interréseau (8) un message de réponse initial (25) construit selon le protocole de communication commun, et
- que le noeud interréseau (8) envoie au noeud de départ (4) le message de réponse initial (25).

4. Procédé selon la revendication 1 ou 2,
**caractérisé par le fait qu'**on oblige le noeud de départ (4) et le noeud d'arrivée (11 ) à utiliser le protocole de communication commun en faisant en sorte
- que le noeud interréseau (8) lise comme informations de noeud d'arrivée au moins un identificateur d'au moins un protocole de communication convenant comme protocole de communication commun,
- que le noeud interréseau (8) teste à l'aide des informations de noeud d'arrivée si le premier protocole de communication est un protocole de communication commun et approprié de ce type,
- qu'un message d'avis (43) est envoyé au noeud de départ (4) si le premier protocole de communication ne convient pas et le noeud de départ envoie alors au noeud interréseau (8) un autre message initial (44) construit selon un deuxième protocole de communication,
- que la procédure comprenant le test, l'émission du message d'avis et l'émission d'un autre message initial soit répétée le cas échéant jusqu'à ce que le noeud de départ (4) ait envoyé un message initial (48) qui est construit selon un protocole de communication commun approprié,
- que le noeud interréseau (8) envoie alors ce message initial (48) au noeud d'arrivée (11),
- que le noeud d'arrivée (11) envoie au noeud interréseau (8) un message de réponse initial (50) construit selon le protocole de communication commun approprié, et
- que le noeud interréseau (8) envoie le message de réponse initial (50) au noeud de départ (4).

5. Procédé selon la revendication 1 ou 2,
**caractérisé par le fait qu'**on oblige le noeud de départ (4) et le noeud d'arrivée (11 ) à utiliser le protocole de communication commun en faisant en sorte
- que le noeud interréseau (8) lise comme informations de noeud d'arrivée au moins un identificateur d'au moins un protocole de communication convenant comme protocole de communication commun,
- que le noeud interréseau (8) teste à l'aide des informations de noeud d'arrivée si le premier protocole de communication est un protocole de communication commun approprié de ce type
- et qu'il envoie au noeud de départ (4), si le premier protocole de communication n'est pas approprié, un message d'avis (63) qui contient un identificateur d'un protocole de communication commun approprié,
- que le noeud de départ (4) envoie alors au noeud interréseau (8) un autre message initial (65) construit selon ce protocole de communication commun,
- que le noeud interréseau (8) envoie alors ce message initial (65) au noeud d'arrivée (11),
- que le noeud d'arrivée (11) envoie au noeud interréseau (8) un message de réponse initial (67) construit selon ce protocole de communication commun, et
- que le noeud interréseau (8) envoie le message de réponse initial (67) au noeud de départ (4).

6. Procédé selon l'une des revendications 3 à 5,
**caractérisé par le fait que**
- le message de réponse initial (25, 50, 67) n'est envoyé par le noeud interréseau (8) au noeud de départ (4) que lorsqu'un test du message de réponse initial (25, 50, 67) effectué par le noeud interréseau (8) indique que ce message est construit selon le protocole de communication commun.

7. Procédé selon la revendication 1 ou 2,
**caractérisé par le fait qu'**on oblige le noeud de départ (4) et le noeud d'arrivée (11) à utiliser le protocole de communication commun en faisant en sorte
- que le noeud interréseau (8) retransmette le message initial (80) sans changement au noeud d'arrivée (11),
- que le noeud d'arrivée (11) teste à l'aide d'informations lues dans une mémoire de données à laquelle il peut accéder (82) si le premier protocole de communication est un protocole de communication commun,
- que, en cas de résultat de test positif, il envoie au noeud interréseau (8) un message de réponse initial (84) construit selon le premier protocole de communication,
- que, en cas de résultat négatif, il lise dans la mémoire de données (82) un identificateur d'un protocole de communication pour la communication avec le noeud de départ (4) et le noeud d'arrivée (11) envoie au noeud interréseau (8) un message de réponse initial (84) construit selon ce protocole de communication,
- que le noeud interréseau (8) teste si le protocole de communication du message de réponse initial (84) est un protocole de communication commun, et
- que, en cas de protocole de communication commun, le noeud interréseau (8) envoie le message de réponse initial (84) au noeud de départ.

8. Procédé selon l'une des revendications précédentes,
**caractérisé par le fait que**
- on démarre une communication entre le noeud de départ (SSP) et le noeud d'arrivée (SCP) qui permette une offre de services par le noeud d'arrivée (SCP) pour un utilisateur de services (KE) relié au noeud de départ (SSP).

9. Procédé selon l'une des revendications précédentes,
**caractérisé par le fait que**
- on utilise comme noeud de départ (SSP) un point de commutation de services d'un réseau intelligent (IN).

10. Procédé selon l'une des revendications précédentes,
**caractérisé par le fait que**
- on utilise comme noeud d'arrivée (SCP) un point de commande de services d'un réseau intelligent (IN).

11. Procédé selon l'une des revendications précédentes,
**caractérisé par le fait que**
- on oblige le noeud de départ (SSP) et le noeud d'arrivée (SCP) à utiliser une version de protocole INAP comme protocole de communication commun.
